# EUROPEAN PATENT APPLICATION

(11) **EP 2 610 591 A2**
(43) Date of publication of application: **03.07.2013**
(21) Application number: 12199637.5
(22) Date of filing: 28.12.2012
(51) Int. Cl.: G01D 3/036

(54) **Computing device and method for correcting dial indicators using the computing device**

(30) Priority: 29.12.2011 CN 201110450164
(71) Applicant: Hong Fu Jin Precision Industry (ShenZhen) Co., Ltd., Shenzhen City, Guangdong 518109 (CN); Hon Hai Precision Industry Co., Ltd., New Taipei City (TW)
(72) Inventor: Lin, Kuei-Yang, Tu-Cheng, New Taipei (TW); Fang, Bo-Kai, New Taipei (TW); Liu, Cheng-He, Shenzhen (CN); Wang, Jian, Shenzhen (CN); Huang, Tao-Hong, Shenzhen (CN); Fu, Ze-Ping, Shenzhen (CN)
(74) Representative: Gray, John James

(57) **Abstract**

In a dial indicator correcting method, a single drive shaft and push rod is moved towards a plurality of dial indicators. The method records a first indicated value of each dial indicator when the push rod pushes a certain distance, and records a second indicated value of each dial indicator when the push rod has pushes against all the dial indicators. The method further sends a second command to the shaft and push rod to move a distance approximately equal to the full measuring range of each indicator, and records a third indicated value of each dial indicator when the push rod moves a certain distance within the full range step. By subtracting the third indicated value from the second indicated value, a fourth indicated value of each dial indicator is obtained and is corrected.

## Description

### Field

Embodiments of the present disclosure generally relate to device verification method, and more particularly to a computing device and method for correcting measurement instruments, such as dial indicators.

### BackGround

Some current measuring instruments only test and measure one dial indicator at a time. Even though the number of dial indicators is large, an operator needs to measure the dial indicators and correct the dial indicators one by one. Thus the efficiency of measuring the dial indicators is low. Therefore, an improved verification method is desirable to address the aforementioned issues.

### Summary

According to one aspect of the disclosure, a computing device is provided. The computing device includes: at least one processor; a storage system; and one or more modules that are stored in the storage system and executed by the at least one processor. The one or more modules includes: a first command module that sends a first command to a single drive shaft connected to the computing device, and controls a push rod of the single drive shaft to move toward a bracket carrying a plurality of dial indicators at a first speed according to the first command, each of the dial indicators having a same measuring range; a first record module that records a first indicated value of the dial indicator of which the measuring rod or probe is contacted by the push rod, and records a second indicated value of each of the dial indicators upon the condition that the push rod has contacted all measuring rods of the dial indicators; a second command module that sends a second command to the single drive shaft, and controls the push rod to move at a second speed according to the second command, when a distance of the push rod is equal to the full measuring range of the dial indicator; a second record module that records a third indicated value of each of the dial indicators at each moving step, and obtains a forth indicated value of each of the dial indicators by subtracting the third indicated value from the second indicated value; a correction module that obtains a corrected value of each of the dial indicators by correcting the fourth indicated value of each of the dial indicators using a preset deviation of the single drive shaft; and a report module that generates a report according to a serial number, the first indicated value, and the corrected value of each of the dial indicators.

According to another aspect of the disclosure, a computer-based method for correcting dial indicators using a computing device is provided. The method includes: sending a first command to a single drive shaft connected to the computing device, and controlling a push rod of the single drive shaft to move toward a bracket carrying a plurality of dial indicators at a first speed according to the first command, each of the dial indicators having a same measuring range; recording a first indicated value of the dial indicator of which the measuring rod is contacted by the push rod, and recording a second indicated value of each of the dial indicators upon the condition that the push rod has contacted all measuring rods of the dial indicators; sending a second command to the single drive shaft, and controlling the push rod to move at a second speed according to the second command, when a distance of the push rod is equal to the full measuring range of the dial indicators; recording a third indicated value of each of the dial indicators at each moving step, and obtaining a forth indicated value of each of the dial indicators by subtracting the third indicated value from the second indicated value; obtaining a corrected value of each of the dial indicators by correcting the forth indicated value of each of the dial indicators using a preset deviation of the single drive shaft; and generating a report according to a serial number, the first indicated value, and the corrected value of each of the dial indicators.

According to a further aspect of the disclosure, a storage medium is provided. The storage medium has stored instructions that, when executed by a processor of a server, causes the processor to perform the correcting method as described above. The storage medium is a non-transitory storage medium.

### BRIEF DESCRIPTION OF THE DRAWINGS

Embodiments of the invention are described, by way of example only, with reference to the accompanying drawings, in which:
FIG. 1 is a block diagram of one embodiment of a computing device interacting with dial indicators.

FIG. 2 is a block diagram of one embodiment of a single drive shaft in FIG. 1.

FIG. 3 is a block diagram of one embodiment of the computing device in FIG. 1.

FIG. 4 is a flowchart illustrating one embodiment of a method for correcting and calibrating dial indicators using the computing device of FIG. 3.

### DETAILED DESCRIPTION

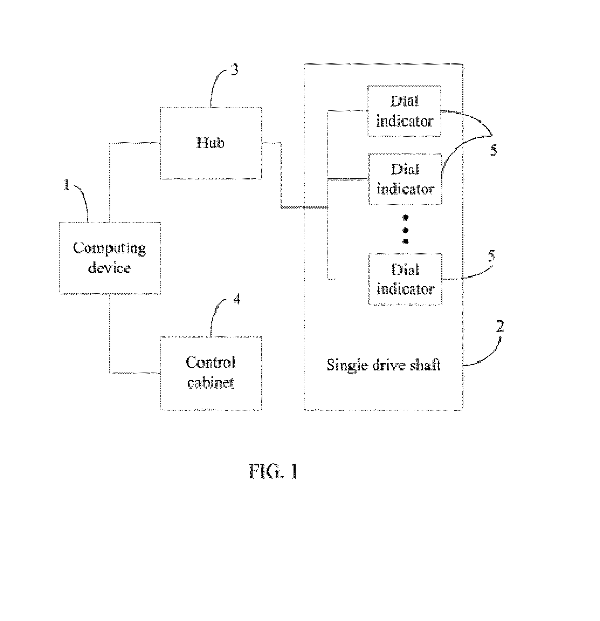

FIG. 1 is a schematic diagram of one embodiment of a computing device 1 that interacts with one or more dial indicators 5. The computing device 1 electronically connects to a single drive shaft 2 through a control cabinet 4. The single drive shaft 2 is attached to the dial indicators 5. In the embodiment, the single drive shaft 2 can be a device improvised from a mechanical axis of a visual measurement device. For example, the single drive shaft 2 is obtained by attaching a fixture to the mechanical axis. The fixture may be equipped with more than one dial indicator 5.

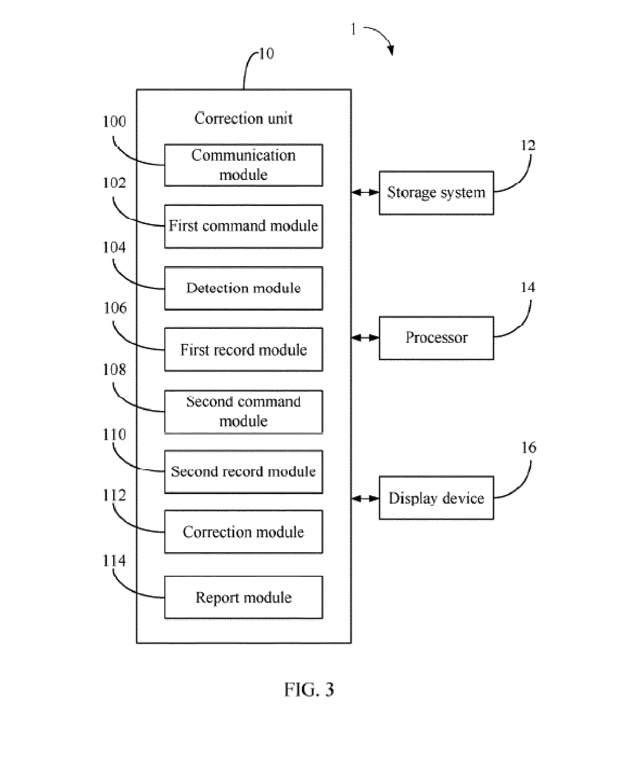

In the embodiment, the computing device 1 comprises a correction unit 10 (shown in Fig. 3). The correction unit 10 verifies and calibrates or corrects all the dial indicators 5 that are installed on the single drive shaft 2 at one time. Each of the dial indicators 5 is connected to the computing device 1 using a data line, and the computing device 1 can collect data from all of the dial indicators 5. Because a count of ports of the computing device 1 is limited, a data hub 3 may be required to connect the computing device 1 and all the dial indicators 5. In the embodiment, the hub 3 is not only used for communication, but also for switching data transmitted between the computing device 1 and the dial indicators 5.

The control cabinet 4 converts one or more control commands into a format of data that can be identified by the single drive shaft 2. Each of the control commands is generated by the correction unit 10 of the computing device 1, and is transmitted to the control cabinet 4.

In the embodiment, each of the dial indicators 5 has a same range of measurement, and each one also has a digital display function.

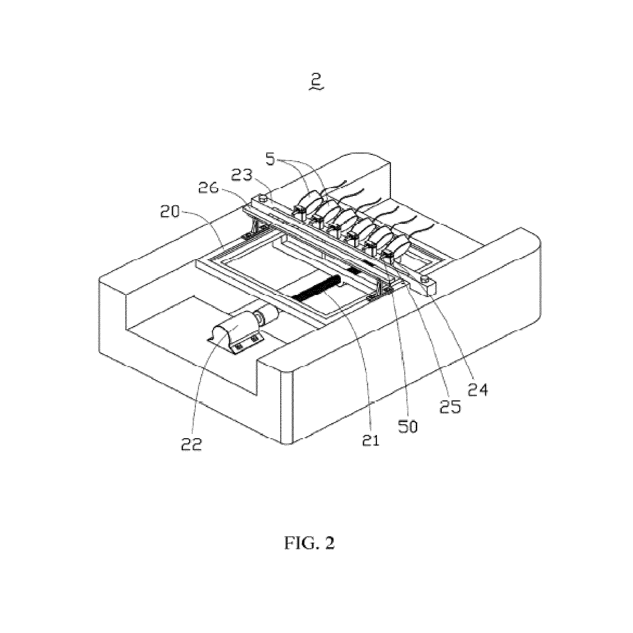

FIG. 2 is a block diagram of one embodiment of the single drive shaft 2 in FIG. 1. The single drive shaft 2 includes a frame 20 and a precision screw 21 under the frame 20. Under the frame 20, the frame 20 includes a though hole that engages the frame 20 with the precision screw 21. The precision screw 21 is connected to a motor 22, and the motor 22 is attached to the single drive shaft 2 and connects to the computing device 1.

The single drive shaft 2 further includes a bracket 23. The bracket 23 includes more than one fastening portion 24, and each of the fastening portions 24 locks one of the dial indicators 5 in place using a latching portion 25. In the embodiment, each dial indicator 5 has a probe or sensor (measuring rod 50), and the fastening portions 24 locks the measuring rods 50. A sliding rail is attached to the frame 20 and a push rod 26 slides in the sliding rail. When the computer device 1 sends a control command to the single drive shaft 2, the motor 22 can move the frame 20 step by step, from one end of the precision screw 21 to the other end of the precision screw 21, to control the push rod 26 to make contact with the dial indicators 5 according to the control command.

FIG. 3 is a block diagram of one embodiment of the computing device 1 in FIG. 1. In one embodiment, the computing device 1 may be a computer, a server, a portable electronic device, or any other electronic device that includes a storage system 12, at least one processor 14, and a display device 16. In one embodiment, the storage system 12 may be a magnetic or an optical storage system, such as a hard disk drive, an optical drive, a compact disc, a digital video disc, a tape drive, or other suitable storage medium. The processor 14 may be a central processing unit including a math co-processor, for example.

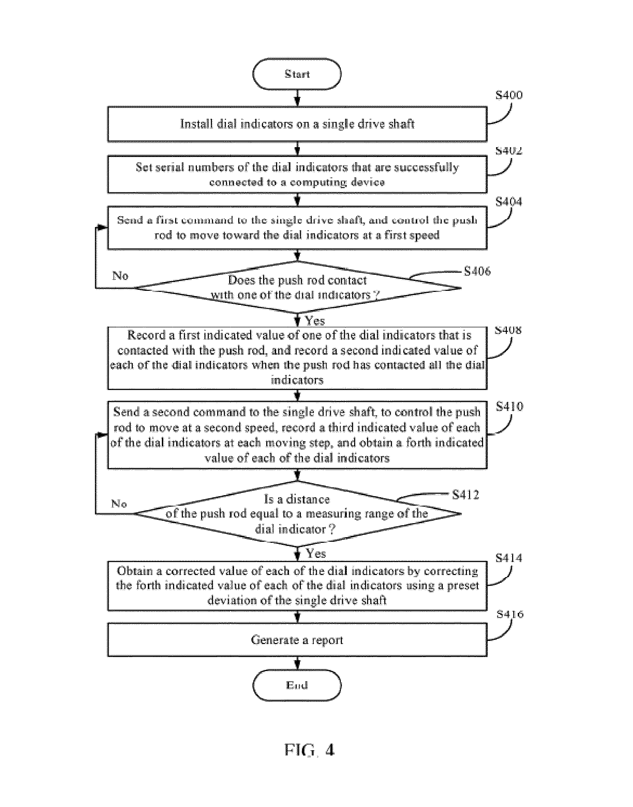

In one embodiment, the correction unit 10 includes a communication module 100, a first command module 102, a detection module 104, a first record module 106, a second command module 108, a second record module 110, a correction module 112, and a report module 114. Each of the modules 100-114 may be a software program including one or more computerized instructions that are stored in the storage system 12 and executed by the processor 14. Detailed functions of the modules 100-114 are described below and shown in FIG. 4.

The communication module 100 detects whether each of the dial indicators 5 is electronically connected to the computing device 1, and sets a serial number for each of the dial indicators 5. For example, the communication module 100 sets a serial number "001," a serial number "002," and a serial number "003" to three dial indicators 5 that are electronically connected to the computing device 1.

The first command module 102 sends a first command to the single drive shaft 2, and controls the push rod 26 to move towards the bracket 23 on which the dial indicators are installed, at a first speed. In the embodiment, all the dial indicators 5 have a same measuring range, and each of the dial indicators 5 has a display screen. The first units of movement may be 0.1 millimeters per step, for example. That is, the single drive shaft 2 moves in units of 0.1 millimeters during one moving step.

The detection module 104 detects whether the push rod 26 makes contact with one measuring rod 50.
Upon the condition that the push rod 26 does make contact with one measuring rod 50, the first record module 106 records a first indicated value of the relevant dial indicator 5. For example, if the push rod 26 makes contact with the measuring rod 50 of the dial indicator 5 with serial number "001," the first record module 106 records the first indicated value of the dial indicator 5 with the serial number "001."

Upon the condition that the push rod 26 has made contact with all the measuring rods 50 of the dial indicators 5, the first record module 106 records a second indicated value in relation to each of the dial indicators 5.

For example, three dial indicators "001," "002," and "003," are installed on the single drive shaft 2, and the push rod 26 moves to the dial indicators 5 according to the first speed, such as about 0.1 millimeters every step. The push rod 26 contacts the measuring rod 50 of a first dial indicator 5 and applies another moving step, that is to say, the push rod 26 only moves a single moving unit of about 0.1 millimeters, and the first record module 106 records the value indicated on the display screen of the first dial indicator 5 as the first indicated value of the first dial indicator 5. Upon the condition that the moving distance of the push rod 26 now includes two units, so about 0.2 millimeters, the push rod 26 pushes against the measuring rod 50 of a second dial indicator 5, and the first record module 106 records the first indicated value of the second dial indicator 5. Upon the condition that the moving distance of the push rod 26 is about 0.025 millimeters, the push rod 26 contacts the measuring rod 50 of a third dial indicator 5, and the first record module 106 records the first indicated value of the third dial indicator 5. Because the push rod 26 moves about 0.1 millimeters every moving step, the push rod 26 may continue to move about 0.05 millimeters after the push rod 26 contacts the third dial indicator 5. When the push rod 26 moves about 0.05 millimeters, the first record module 106 further records the second indicated values of the three dial indicators 5.

The second command module 108 sends a second command to the single drive shaft 2, and controls the push rod 26 to move toward the bracket 23 according to a second speed, until the total distance moved by the push rod 26 is equal to the full measuring range of the dial indicator 5. In one embodiment, the second speed may be 0.2 millimeters every moving step.

The second record module 110 records a third indicated value of each of the dial indicators 5 upon the condition that the push rod 26 moves a certain distance at each moving step, and obtains a forth indicated value of each of the dial indicators 5 by subtracting the third indicated value from the second indicated value. For example, the second indicated value of one of the dial indicators 5 may be 0.26 millimeters, and the third indicated value of the dial indicator may be about 0.45 millimeters when the push rod 26 has in fact moved about 0.2 millimeters. In this case, the second record module 110 computes that the forth indicated value of the dial indicator 5 is about 0.19 millimeters.

The correction module 112 obtains a corrected value of each of the dial indicators 5 by correcting the forth indicated value of each of the dial indicators 5 using a preset deviation of the single drive shaft 2. In the embodiment, the preset deviation of the single drive shaft 2 can be measured using a grating interferometer.

The report module 114 generates a report according to the indicator serial number, the first indicated value, and the corrected value of each of the dial indicators 5, and displays the report on the display device 16.

FIG. 4 is a flowchart illustrating one embodiment of a method for correcting dial indicators using the computing device 1 of FIG. 3. Depending on the embodiment, additional steps may be added, others removed, and the ordering of the steps may be changed.

In step S400, the user installs the dial indicators 5 on the single drive shaft 2, and each of the dial indicators 5 is connected to the computing device 1 using a data line.

In step S402, upon the condition that all dial indicators 5 are successfully connected to the computing device 1, the communication module 100 allocates a serial number to each of the dial indicators 5.

In step S404, the first command module 102 sends a first command to the single drive shaft 2, and controls the push rod 26 to move toward the bracket 23 at a first speed according to the first command. In the embodiment, the first speed may be 0.1 millimeters every moving step, for example. That is, the single drive shaft 2 moves 0.1 millimeters one moving step.

In step S406, the detection module 104 detects whether the push rod 26 has made contact with one of the measuring rods 50. Upon the condition that the push rod 26 has made contact with one of the measuring rods 50, step S408 is implemented. Until the push rod 26 makes contact with any measuring rods 50, the implementation of step S404 is continued.

In step S408, the first record module 106 records a first indicated value of one of the dial indicators 5 that has been contacted by the push rod 26. For example, if the push rod 26 contacts the measuring rod 50 of the dial indicator 5 with the serial number "001," the first record module 106 records the first indicated value of the dial indicator 5 with the serial number "001." The first record module 106 further records a second indicated value of each of the dial indicators 5, upon the condition that the push rod 26 has contacted the measuring rods 50 of all the dial indicators 5.

In step S410, the second command module 108 sends a second command to the single drive shaft 2, and controls the push rod 26 to move toward the bracket 23 at a second speed according to the second command. The second record module 110 records a third indicated value of each of the dial indicators 5 upon the condition that the push rod 26 moves a certain distance at each moving step, and obtains a forth indicated value of each of the dial indicators 5 by subtracting the third indicated value from the second indicated value. In one embodiment, the second speed may be 0.2 millimeters every moving step.

In step S412, the second command module 108 determines whether the distance moved by the push rod 26 is equal to the full measuring range of the dial indicator 5. Upon the condition that the distance moved by the push rod 26 is equal to the measuring range, the procedure goes to step S414. Upon the condition that the moving distance of the push rod 26 is not equal to the measuring range, the procedure returns to step S410.

In step S414, the correction module 112 obtains a corrected value of each of the dial indicators 5 by correcting the forth indicated value of each of the dial indicators 5 using the preset deviation of the single drive shaft 2. In the embodiment, the preset deviation of the single drive shaft 2 can be measured using a grating interferometer.

In step S416, the report module 114 generates a report according to the serial number of each indicator, including the first indicated value, and the corrected value of each of the dial indicators 5, and displays the report on the display device 16.

Although certain inventive embodiments of the present disclosure have been specifically described, the present disclosure is not to be construed as being limited thereto. Various changes or modifications may be made to the present disclosure without departing from the scope and spirit of the present disclosure.

## Claims

1. A computing device, comprising:
at least one processor;
a storage system; and
one or more modules that are stored in the storage system and executed by the at least one processor, the one or more modules comprising:
a first command module that sends a first command to a single drive shaft connected to the computing device, and controls a push rod of the single drive shaft to move toward a bracket installed with a plurality of dial indicators at a first speed according to the first command, each of the dial indicators having a same measuring range;
a first record module that records a first indicated value of the dial indicator whose measuring rod contacts with the push rod, and records a second indicated value of each of the dial indicators upon a condition that the push rod has contacted all measuring rods of the dial indicators;
a second command module that sends a second command to the single drive shaft, and controls the push rod to move at a second speed according to the second command;
a second record module that records a third indicated value of each of the dial indicators at a moving step, and obtains a forth indicated value of each of the dial indicators by subtracting the third indicated value from the second indicated value;
a correction module that obtains a corrected value of each of the dial indicators by correcting the forth indicated value of each of the dial indicators using a preset deviation of the single drive shaft; and
a report module that generates a report according to a serial number, the first indicated value, and the corrected value of each of the dial indicators.

2. The computing device as described in claim 1, further comprising a communication module that detects whether each of the dial indicators successfully connects to the computing device, and sets serial numbers of the dial indicators that are successfully connected to the computing device.

3. The computing device as described in claim 1, further comprising a detection module that detects whether the push rod contacts with the measuring rod of each of the dial indicators, upon the condition that the push rod moves to the bracket at the first speed.

4. The computing device as described in claim 1, wherein the single drive shaft comprises:
a precision screw;
the bracket;
a plurality of fastening portions fixed on the bracket, each of the plurality of fastening portions configured for locking the measuring rod of each of the dial indicators into the bracket using a latching portion;
a frame comprising a though hole and a sliding rail; and
a motor connected to the precession screw and the computing device via the single drive shaft, and configured for driving the frame to move from one end of the precision screw to the other end of the precision screw, and controlling the push rod of the single drive shaft to move to the dial indicators.

5. The computing device as described in claim 4, wherein the though hole is installed under the frame and is engaged with the precession screw, the sliding rail is attached to the frame, and the push rod slides in the sliding rail.

6. A method for correcting dial indicators using a computing device, the method comprising:
sending a first command to a single drive shaft connected to the computing device, and controlling a push rod of the single drive shaft to move toward a bracket installed with a plurality of dial indicators at a first speed according to the first command, each of the dial indicators having a same measuring range;
recording a first indicated value of the dial indicator whose measuring rod contacts with the push rod, and recording a second indicated value of each of the dial indicators upon a condition that the push rod has contacted all measuring rods of the dial indicators;
sending a second command to the single drive shaft, and controlling the push rod to move at a second speed according to the second command;
recording a third indicated value of each of the dial indicators at a moving step,
and obtaining a forth indicated value of each of the dial indicators by subtracting the third indicated value from the second indicated value;
obtaining a corrected value of each of the dial indicators by correcting the forth indicated value of each of the dial indicators using a preset deviation of the single drive shaft; and
generating a report according to a serial number, the first indicated value, and
the corrected value of each of the dial indicators.

7. The method as described in claim 6, further comprising:
detecting whether each of the dial indicators successfully connects to the computing device, and setting serial numbers of the dial indicators that are successfully connected to the computing device.

8. The method as described in claim 6, further comprising:
detecting whether the push rod contacts with the measuring rod of each of the dial indicators, upon the condition that the push rod moves to the bracket at the first speed.

9. The method as described in claim 6, wherein the single drive shaft comprises:
a precision screw;
the bracket;
a plurality of fastening portions fixed on the bracket, each of the plurality of fastening portions configured for locking the measuring rod of each of the dial indicators into the bracket using a latching portion;
a frame comprising a though hole and a sliding rail; and
a motor connected to the precession screw and the computing device via the single drive shaft, and configured for driving the frame to move from one end of the precision screw to the other end of the precision screw, and controlling the push rod of the single drive shaft to move to the dial indicators.

10. The method as described in claim 9, wherein the though hole is installed under the frame and is engaged with the precession screw, the sliding rail is attached to the frame, and the push rod slides in the sliding rail.

11. A non-transitory storage medium having stored thereon instructions that, when executed by a processor of a computing device, cause the computing device to perform a method of correcting dial indicators using a computing device, the method comprising:
sending a first command to a single drive shaft connected to the computing device, and controlling a push rod of the single drive shaft to move toward a bracket installed with a plurality of dial indicators at a first speed according to the first command, each of the dial indicators having a same measuring range;
recording a first indicated value of the dial indicator whose measuring rod contacts with the push rod, and recording a second indicated value of each of the dial indicators upon a condition that the push rod has contacted all measuring rods of the dial indicators;
sending a second command to the single drive shaft, and controlling the push rod to move at a second speed according to the second command;
recording a third indicated value of each of the dial indicators at a moving step,
and obtaining a forth indicated value of each of the dial indicators by subtracting the third indicated value from the second indicated value;
obtaining a corrected value of each of the dial indicators by correcting the forth indicated value of each of the dial indicators using a preset deviation of the single drive shaft; and
generating a report according to a serial number, the first indicated value, and
the corrected value of each of the dial indicators.

12. The non-transitory storage medium as described in claim 11, wherein the method further comprises:
detecting whether each of the dial indicators successfully connects to the computing device, and setting serial numbers of the dial indicators that are successfully connected to the computing device.

13. The non-transitory storage medium as described in claim 11, wherein the method further comprises:
detecting whether the push rod contacts with the measuring rod of each of the dial indicators, upon the condition that the push rod moves to the bracket at the first speed.

14. The non-transitory storage medium as described in claim 11, wherein the single drive shaft comprises:
a precision screw;
the bracket;
a plurality of fastening portions fixed on the bracket, each of the plurality of fastening portions configured for locking the measuring rod of each of the dial indicators into the bracket using a latching portion;
a frame comprising a though hole and a sliding rail; and
a motor connected to the precession screw and the computing device via the single drive shaft, and configured for driving the frame to move from one end of the precision screw to the other end of the precision screw, and controlling the push rod of the single drive shaft to move to the dial indicators.

15. The non-transitory storage medium as described in claim 14, wherein the though hole is installed under the frame and is engaged with the precession screw, the sliding rail is attached to the frame, and the push rod slides in the sliding rail.
